(19) **Europäisches Patentamt / European Patent Office / Office européen des brevets**

(11) **EP 3 049 280 B1**

(12) **FASCICULE DE BREVET EUROPEEN**

(45) Date de publication et mention
de la délivrance du brevet:
**03.06.2020 Bulletin 2020/23**

(51) Int Cl.:
***B60Q 1/14*** *(2006.01)*     ***B60J 3/04*** *(2006.01)*

(21) Numéro de dépôt: **14771905.8**

(86) Numéro de dépôt international:
**PCT/EP2014/070268**

(22) Date de dépôt: **23.09.2014**

(87) Numéro de publication internationale:
**WO 2015/044146 (02.04.2015 Gazette 2015/13)**

(54) **DISPOSITIF ET PROCÉDÉ D'AIDE À LA CONDUITE**

VORRICHTUNG UND VERFAHREN ZUR FAHRERUNTERSTÜZUNG

DRIVING ASSISTANCE DEVICE AND METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2013 FR 1359279**

(43) Date de publication de la demande:
**03.08.2016 Bulletin 2016/31**

(73) Titulaire: **Valeo Vision**
**93012 Bobigny Cedex (FR)**

(72) Inventeurs:
- **FLEURY, Benoist**
  **F-94300 Vincennes (FR)**
- **HUE, David**
  **F-95430 Butry sur Oise (FR)**
- **BEEV, Kostadin**
  **F-77184 Emerainville (FR)**

(56) Documents cités:
**DE-A1-102012 008 913**    **US-A- 4 286 308**
**US-A1- 2012 126 099**    **US-B1- 7 970 172**

EP 3 049 280 B1

**Description**

*Domaine technique de l'invention*

L'invention concerne un dispositif d'aide à la conduite d'un véhicule automobile. L'invention concerne également un procédé d'aide à la conduite d'un véhicule automobile.
Un tel dispositif et un tel procédé sont connus de US 4286308 A.

*Arrière-plan technologique*

La présente invention concerne les procédés et les dispositifs destinés à apporter une aide à la conduite des véhicules automobiles, lorsque la luminosité extérieure est faible, et impose l'allumage des feux, mais aussi lorsque la luminosité extérieure est importante.
Lorsque la luminosité extérieure est faible, il est connu d'utiliser des faisceaux lumineux pour éclairer la scène de route. Les faisceaux lumineux émis par les dispositifs d'éclairage équipant les véhicules sont régis par des réglementations internationales, qui fixent des intensités maximales et minimales à respecter, par exemple sur un écran placé à distance et dans l'axe du dispositif d'éclairage. Ces réglementations ont pour finalité de simultanément :

- fournir au conducteur du véhicule équipé de ce dispositif d'éclairage un éclairage satisfaisant de la scène de route sur laquelle il circule, pour qu'il puisse appréhender son environnement dans les meilleures conditions possibles, et
- éviter d'éblouir les conducteurs d'autres véhicules, qu'ils circulent en sens inverse (véhicules croisés) ou qu'ils circulent dans le même sens (véhicules suivis).

Dans le but de répondre à ces finalités réglementaires et dans une optique d'améliorer le confort et la sécurité du conducteur, plusieurs solutions ont été proposées. L'une d'entre elle consiste à utiliser un dispositif d'aide à la conduite composé d'un éclairage pulsé synchronisé avec un écran à transmission variable, de façon à ce que l'éclairage atteigne sa valeur maximale quand le coefficient de transmission de l'écran atteint sa valeur maximale, c'est-à-dire une transparence maximale, et de façon à ce que l'éclairage atteigne sa valeur minimale quand le coefficient de transmission de l'écran à transmission variable atteint sa valeur minimale, c'est-à-dire une transparence minimale.
Ainsi, grâce à cette synchronisation, le conducteur profite pleinement de son éclairage, tout en réduisant les risques d'éblouissement par les sources de lumières extérieures, car la vision du conducteur est fortement amoindrie quand l'écran à transmission variable a sa transparence au minimum.
D'autre part, l'éclairage pulsé n'éblouit pas les autres véhicules puisqu'ils ne perçoivent qu'un éclairement moyen qui est prévu pour être conforme aux réglementations susmentionnées.
Néanmoins, cette solution a pour désavantage de réduire la perception par le conducteur de la luminosité de toute source extérieure de lumière qui n'est pourtant pas responsable d'éblouissement, telle que l'éclairage public, les feux d'autres véhicules situés suffisamment loin pour ne pas être éblouissants, les feux tricolores, etc. En particulier pour les feux des autres véhicules, une telle solution peut faire perdre ou tout du moins limite la perception de la vitesse ou de la trajectoire qu'apporte leur éclairage, quand il n'est pas atténué.
D'autre part, utiliser un éclairage pulsé nécessite plus de puissance électrique pour fournir le même éclairement moyen qu'un éclairage continu à cause de la perte en efficacité des sources de lumière lorsqu'elles sont pulsées à des courants plus importants (selon l'état actuel de la technologie).
De même, lorsque la luminosité est importante, on peut rencontrer des phénomènes d'éblouissement qu'il est souhaitable de traiter.

*Objectifs de l'invention*

L'invention vise à pallier au moins certains des inconvénients des dispositifs d'aide à la conduite connus.
En particulier, l'invention vise à fournir, dans au moins un mode de réalisation de l'invention, un dispositif et un procédé d'aide à la conduite qui permet d'éviter les éblouissements, de jour comme de nuit, tout en conservant au maximum la luminosité provenant de sources extérieures non éblouissantes.
L'invention vise aussi à fournir, dans au moins un mode de réalisation de l'invention, un dispositif et un procédé d'aide à la conduite qui permet d'optimiser la consommation de courant électrique nécessaire du système.

*Exposé de l'invention*

Pour ce faire, l'invention concerne un dispositif d'aide à la conduite d'un véhicule automobile comprenant un écran à transmission variable, destiné à être disposé entre une scène de route et un conducteur du véhicule, ledit dispositif d'aide étant configuré pour, en phase active, piloter un coefficient de transmission de l'écran à transmission variable, caractérisé en ce que ledit dispositif comprend un moyen d'évaluation, notamment de mesure, de l'éblouissement et est en outre configuré pour modifier le coefficient de transmission de l'écran à transmission variable en fonction de l'éblouissement mesuré par le moyen d'évaluation de l'éblouissement. Le moyen d'évaluation de l'éblouissement constitue en particulier un capteur d'éblouissement.

Un dispositif selon l'invention permet donc d'adapter la transparence de l'écran à transmission variable à l'éblouissement effectivement mesuré par le moyen d'évaluation de l'éblouissement et ainsi de ne pas réduire en permanence la luminosité extérieure si le conducteur n'est pas effectivement ébloui.

Selon l'invention, le véhicule étant équipé d'au moins un dispositif d'éclairage apte à émettre un faisceau d'éclairage de la scène de route en avant du véhicule, ledit dispositif d'aide est configuré pour, en phase active, piloter un allumage d'au moins une source lumineuse du dispositif d'éclairage et ledit coefficient de transmission de l'écran à transmission variable, en relation l'un avec l'autre, par un signal pulsé.

Selon l'invention, le dispositif d'aide pilote ainsi avec un signal pulsé l'éclairage du véhicule pour la conduite de nuit et le coefficient de transmission de l'écran à transmission variable, afin d'améliorer la vision du conducteur sans éblouir les conducteurs des autres véhicules.

Selon l'invention, le dispositif d'aide est configuré pour, en phase active, piloter l'allumage par un premier signal pulsé périodique de période T et de rapport cyclique R1 et le coefficient de transmission de l'écran à transmission variable par un deuxième signal pulsé périodique de période T et de rapport cyclique R2, ledit dispositif étant configuré pour modifier le coefficient de transmission de l'écran à transmission variable par le biais d'une modification du deuxième signal pulsé, de sorte que le rapport cyclique R2 prenne une valeur entre :

- son maximum lorsque l'éblouissement mesuré par le moyen d'évaluation de l'éblouissement est en dessous d'un premier seuil, et
- R1 lorsque l'éblouissement mesuré par le moyen d'évaluation de l'éblouissement est au dessus d'un second seuil.

On entend par « rapport cyclique » la valeur qui est égale à t/T, t correspondant au temps où la valeur du signal pulsé est au maximum, et T à la période du signal pulsé.

Selon l'invention, la transparence de l'écran à transmission variable est à son maximum quand il n'y a pas ou peu d'éblouissement, pour ne pas réduire la luminosité extérieure, et le deuxième signal pulsé a le même rapport cyclique que le premier signal pulsé quand il y a éblouissement maximum, afin de réduire cet éblouissement tout en profitant pleinement de l'éclairage du dispositif d'éclairage.

Selon l'invention, le dispositif d'aide est configuré pour modifier le pilotage de l'allumage par le biais d'une modification du premier signal pulsé, de sorte que le rapport cyclique R1 prenne une valeur entre :

- son maximum lorsque l'éblouissement mesuré par le moyen d'évaluation de l'éblouissement est en dessous d'un troisième seuil, et
- son minimum lorsque l'éblouissement mesuré par le moyen d'évaluation de l'éblouissement est au dessus d'un quatrième seuil.

On entend ici par « son minimum » la valeur du rapport cyclique R1 minimale pour laquelle subsiste un éclairage suffisamment important notamment pour respecter les différentes réglementations, et non pas un rapport cyclique proche de 0.

Avantageusement, la valeur maximum du rapport cyclique R1 ne doit pas dépasser la valeur du rapport cyclique R2 de façon à éviter au conducteur une diminution de la perception de son éclairage pulsé.

Avantageusement et selon l'invention, R1 prend des valeurs identiques à R2.

Avantageusement et selon l'invention, le dispositif d'aide est configuré pour modifier le pilotage de l'allumage par le biais d'une modification de l'amplitude du premier signal pulsé.

Selon cet aspect de l'invention, le dispositif peut régler la puissance de l'allumage afin de réduire la puissance utilisée et ainsi optimiser la consommation de courant électrique nécessaire du système et éviter les valeurs fortes de courant.

Avantageusement et selon l'invention, le dispositif d'aide est configuré pour modifier le pilotage de l'allumage par le biais d'une modification de l'amplitude du premier signal pulsé de sorte que l'éclairement moyen de l'allumage pendant la période T soit constant lorsque le rapport cyclique R1 varie.

Selon cet aspect de l'invention, le dispositif d'allumage éclaire la route avec un éclairage moyen constant pour se conformer aux exigences des réglementations.

Avantageusement et selon l'invention, le dispositif d'aide comprend un capteur de luminosité et ledit dispositif est configuré pour adapter les seuils d'éblouissement à la luminosité mesurée.

Selon cet aspect de l'invention, le dispositif d'aide se sert de la mesure de luminosité du capteur de luminosité pour déterminer les seuils d'éblouissement, car une même mesure par le moyen d'évaluation de l'éblouissement ne correspond pas nécessairement au même éblouissement perçu par le conducteur, en fonction de la luminosité ambiante mesurée par le capteur de luminosité.

Avantageusement et selon l'invention, le moyen d'évaluation de l'éblouissement est un capteur de luminosité dont on traite les mesures pour en déduire l'éblouissement.

Avantageusement et selon l'invention, l'écran à transmission variable est constitué :

- par le pare-brise du véhicule,
- par un écran disposé entre le pare-brise du véhicule et le conducteur du véhicule, ou
- par des lunettes portées par le conducteur du véhicule.

Avantageusement et selon l'invention, l'écran à transmission variable est constitué par des lunettes portées par le conducteur du véhicule, et en ce que le moyen d'évaluation de l'éblouissement est disposé sur les lunettes.

Selon cet aspect de l'invention, le moyen d'évaluation de l'éblouissement est disposé au plus près des yeux du conducteur, et permet donc une mesure de l'éblouissement proche de l'éblouissement effectivement perçu par le conducteur.

Cette mesure pertinente de l'éblouissement peut également être réalisée en intégrant le moyen d'évaluation de l'éblouissement au niveau du pare-brise du véhicule, proche du rétroviseur intérieur par exemple.

L'invention concerne également des lunettes pour le dispositif d'aide selon l'invention.

L'invention concerne également un procédé d'aide à la conduite d'un véhicule automobile, le véhicule étant équipé d'un écran à transmission variable destiné à être disposé entre la scène de route et un conducteur du véhicule, ledit procédé comprenant une étape de pilotage d'un coefficient de transmission de l'écran à transmission variable par un signal pulsé, caractérisé en ce que le procédé contient une étape de modification du coefficient de transmission de l'écran à transmission variable en fonction de l'éblouissement mesuré par un moyen d'évaluation de l'éblouissement.

Le procédé selon l'invention permet donc d'adapter la transparence de l'écran à transmission variable à l'éblouissement effectivement mesuré par le moyen d'évaluation de l'éblouissement et ainsi de ne pas réduire en permanence la luminosité extérieure si le conducteur n'est pas effectivement ébloui.

Selon l'invention, le véhicule étant équipé d'au moins un dispositif d'éclairage apte à émettre un faisceau d'éclairage d'une scène de route en avant du véhicule, ladite étape de pilotage est configuré pour permettre un pilotage, en relation l'un avec l'autre, d'un allumage d'au moins une source lumineuse du dispositif d'éclairage et dudit coefficient de transmission.

Selon l'invention, l'allumage étant piloté par un premier signal pulsé périodique de période T et de rapport cyclique R1 et le coefficient de transmission de l'écran à transmission variable par un deuxième signal pulsé périodique de période T et de rapport cyclique R2, l'étape de modification du coefficient de transmission de l'écran à transmission variable comprend une étape de modification du deuxième signal pulsé, de sorte que le rapport cyclique R2 prenne une valeur entre :

- son maximum lorsque l'éblouissement mesuré par le moyen d'évaluation de l'éblouissement est en dessous d'un premier seuil, et
- R1 lorsque l'éblouissement mesuré par le moyen d'évaluation de l'éblouissement est au dessus d'un second seuil.

Selon un mode de réalisation de l'invention, le procédé comprend une étape de modification du pilotage de l'allumage par le biais d'une modification de l'amplitude du premier signal pulsé.

Avantageusement et selon l'invention, le pilotage de l'allumage par le biais d'une modification de l'amplitude du premier signal pulsé est effectué de sorte que l'éclairement moyen de l'allumage pendant la période T soit constant lorsque le rapport cyclique R1 varie.

Avantageusement et selon l'invention, le procédé selon l'invention est mis en œuvre par le dispositif selon l'invention.

Avantageusement et selon l'invention, le dispositif selon l'invention met en œuvre le dispositif selon l'invention.

*Description des figures*

D'autres buts, caractéristiques et avantages de l'invention apparaîtront à la lecture de la description suivante donnée à titre uniquement non limitatif et qui se réfère aux figures annexées dans lesquelles :

- la figure 1 est une vue schématique en coupe partielle d'un véhicule comprenant un dispositif selon un mode de réalisation de l'invention,
- la figure 2 est une vue schématique du dispositif d'aide selon un mode de réalisation de l'invention,

- la figure 3 est un ensemble de diagrammes représentant les signaux pulsés pendant une période T en fonction de différents niveaux d'éblouissement et selon deux modes de réalisation.

*Description détaillée d'un mode de réalisation de l'invention*

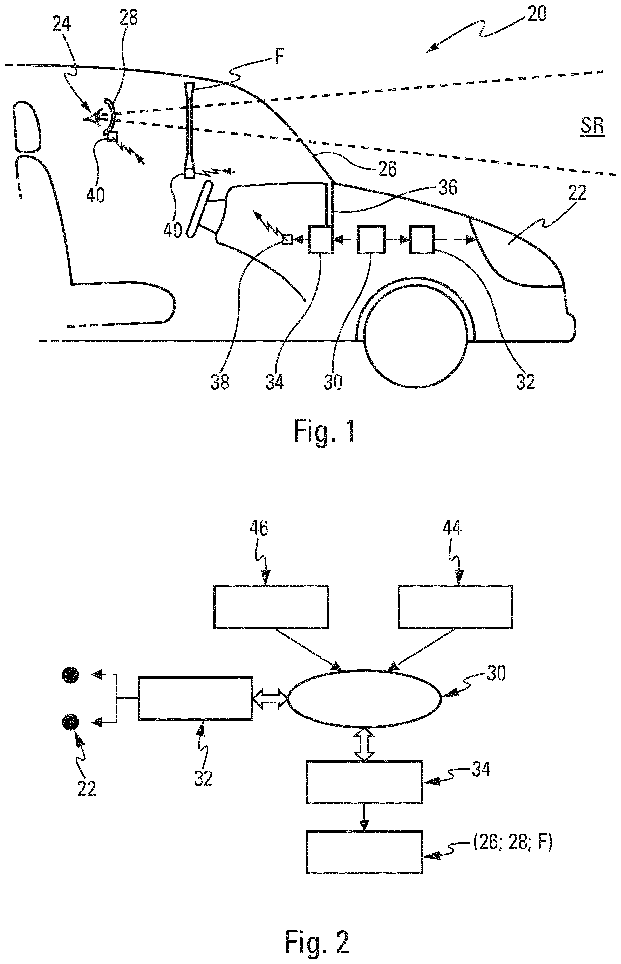

La figure 1 représente de façon schématique en coupe partielle un véhicule 20 comprenant un dispositif d'aide selon un mode de réalisation de l'invention. Le véhicule 20 est équipé de manière conventionnelle par un dispositif d'éclairage 22 apte à émettre un faisceau d'éclairage d'une scène de route SR grâce à une source lumineuse, et est piloté par un conducteur, symbolisé par son œil 24. La scène de route SR correspond à ce qu'observe le conducteur 24 du véhicule 20. Le conducteur 24 observe ici la scène de route SR devant le véhicule 20 et à travers le pare-brise 26.

Un écran à transmission variable est disposé dans le champ de vision du conducteur 24, entre ce dernier et la scène de route SR. Selon différents modes de réalisation de l'invention, l'écran à transmission variable peut être constitué :

- d'un écran F proprement dit, placé entre le conducteur 24 et le pare-brise 26, par exemple rabattable à la façon d'un pare-soleil,
- du pare-brise 26 lui-même, ou
- d'une paire de lunettes 28, portées par le conducteur 24, à l'instar de lunettes de soleil ou lunettes correctrices, un seul verre de lunette ayant été représenté sur la figure 1.

Ces trois modes de réalisation ont été représentés simultanément sur la figure 1, pour la commodité de l'exposé. Ce ne sont cependant que des variantes de réalisation, chacun d'entre eux tendant à obtenir le même résultat. Dans la suite de la description, le terme « écran à transmission variable » sera utilisé pour désigner indifféremment l'un de ces trois modes de réalisation.

Quel que soit le mode de réalisation, le dispositif d'aide, quand il est en phase active (c'est-à-dire en fonctionnement), pilote le coefficient de transmission de l'écran à transmission variable et la source lumineuse du dispositif d'éclairage 22 du véhicule 20, en relation l'un avec l'autre. En particulier en cas d'éblouissement, le pilotage se fera en synchronisme. Cela a pour but que l'écran à transmission variable ait son coefficient de transmission au maximum (c'est-à-dire que la transparence de l'écran est au maximum) quand le dispositif d'éclairage 22 est allumé, et donc que le conducteur 24 voit la scène de route SR éclairée par son dispositif d'éclairage 22.

Pour ce faire, le dispositif comprend ici une centrale de commande 30 qui génère les signaux pulsés destinés à commander le dispositif d'éclairage 22 et l'écran à transmission variable.

La centrale de commande 30 pourra être reliée à un circuit de gestion 32 qui commande l'alimentation du dispositif d'allumage de manière à ce que ledit dispositif émette un faisceau d'intensité variable entre une valeur maximale et une valeur minimale périodiquement variable selon le premier signal pulsé.

La centrale de commande 30 pourra aussi être reliée à un circuit de commande du coefficient de transmission 34 pour la transmission du deuxième signal pulsé. Si l'écran à transmission variable est mobile ou éloigné de la centrale de commande 30 (dans le cas de l'utilisation des lunettes 28 par exemple), la transmission du signal pulsé peut s'effectuer par une liaison sans-fil, en utilisant un protocole de communication sans-fil déterminé, comme par exemple selon les normes IEEE 802.15.1 ainsi que toutes ses extensions (communément dénommé par la marque déposée Bluetooth) ou IEEE 802.11 (communément dénommé par la marque déposée Wi-Fi).

Si la transmission du deuxième signal pulsé de la centrale de commande 30 à l'écran à transmission variable est effectuée sans-fil, le circuit de commande du coefficient de transmission 34 comprend, par exemple, un émetteur d'ondes de télécommande 38, et l'écran à transmission variable est pourvu, par exemple, d'un récepteur 40 de ces mêmes ondes de télécommande. Le récepteur 40 commande alors le coefficient de transmission variable de l'écran, dans le sens où il applique à l'écran de transmission variable les ordres déterminés correspondant au deuxième signal pulsé.

Dans le mode de réalisation où un capteur d'éblouissement 46 est situé pour exemple sur les lunettes 28, une communication sans-fil sera aussi effectuée entre le capteur d'éblouissement 46 et la centrale de commande 30 pour transmettre les mesures du capteur d'éblouissement 46.

La figure 2 est une vue schématique du dispositif d'aide selon un mode de réalisation de l'invention. La centrale de commande 30 reçoit les informations des mesures provenant du capteur d'éblouissement 46 et d'un capteur de luminosité 44. Le capteur de luminosité 44 permet à la centrale de commande 30 de connaitre la luminosité ambiante de la scène de route SR et ainsi d'adapter les seuils relatifs aux mesures d'éblouissement. En effet, une même source de lumière provoquera ou non un éblouissement en fonction de la luminosité ambiante.

Le capteur d'éblouissement 46 fonctionne grâce à des mesures qui sont ensuite traitées pour déterminer s'il y a effectivement éblouissement du conducteur 24 grâce à des méthodes connues de l'Homme du métier. Par exemple, il est possible d'utiliser l'équation de Schmidt-Clausen et Bindels et l'échelle de De Boer pour déterminer l'éblouissement.

L'équation de Schmidt-Clausen et Bindels se présente sous cette forme :

$$W = 5.0 - 2\log\left(\frac{E}{0.003\,(1 + \sqrt{(L/0.04)}.\,\phi^{\,0.46}}\right)$$

Dans cette équation E est une grandeur donnant une image de la quantité de lumière émise, à savoir l'éclairement lumineux mesuré à une distance donnée sur l'œil du conducteur 24 (mesuré en lux), L la luminance d'adaptation (mesurée en candela par mètre carré) et φ l'angle (mesuré en arcminute) entre l'axe de vision du conducteur 24 et la source d'éblouissement.

La valeur W donne une valeur d'éblouissement qui est comparé à l'échelle de De Boer qui permet de déterminer le niveau d'inconfort lié à l'éblouissement. L'échelle contient des paliers discrets de valeurs de W donnant l'inconfort lié à l'éblouissement :

- W = 9 : à peine perceptible
- W = 7 : satisfaisant
- W = 5 : admissible
- W = 3 : dérangeant
- W = 1 : insupportable

Les valeurs intermédiaires de la valeur W donnent des inconforts intermédiaires entre ces paliers.

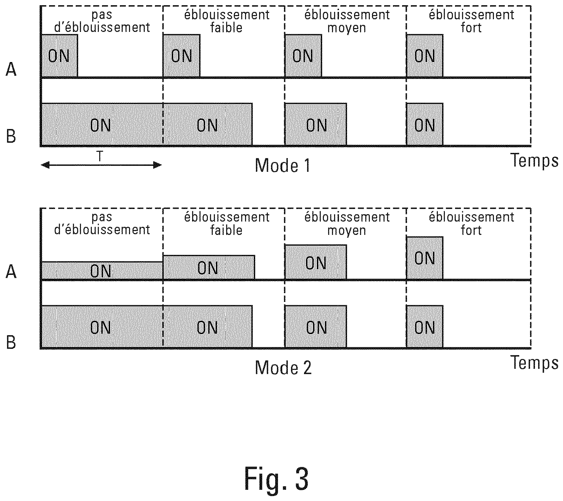

Le dispositif d'aide est adapté pour calculer cette valeur W afin d'agir en conséquence pour abaisser cette valeur, grâce aux modifications comme représentés dans la figure 3. En complément, le dispositif d'aide peut prendre une valeur W comme objectif d'éblouissement à ne pas dépasser et adapter les modifications en conséquence. Notamment, la modification de la transparence de l'écran influe sur la valeur E de l'équation.

Selon différents mode de réalisation, le capteur d'éblouissement 46 peut être un capteur de luminosité dont on traite les mesures pour en déduire l'éblouissement, une caméra telle que celles utilisées dans les dispositifs d'éclairage sans éblouissement GFHB (Glare Free High Beam), ou tout autre moyen d'évaluation, notamment de mesure, de l'éblouissement connu de l'Homme du métier.

La figure 3 présente des diagrammes des signaux pulsés pendant une période T en fonction de différents niveaux d'éblouissement et selon deux modes de réalisation.

Chaque diagramme A et B présente les variations des signaux pulsés qui commandent respectivement le dispositif d'éclairage 22 et l'écran à transmission variable en fonction du temps et sur un intervalle correspondant à une période T. Chaque intervalle est représenté quatre fois, pour présenter les variations des signaux pendant une période T en fonction de différents niveaux d'éblouissement : « pas d'éblouissement », « éblouissement faible », « éblouissement moyen » et « éblouissement fort », disposés respectivement de gauche à droite. Le niveau « pas d'éblouissement » correspond à une valeur d'éblouissement mesurée par le capteur d'éblouissement 46 en dessous d'un premier seuil. Le niveau « éblouissement fort » correspond à une valeur d'éblouissement mesurée par le capteur d'éblouissement 46 au dessus d'un second seuil.

Le diagramme intitulé Mode 1 présente un mode de réalisation qui n'appartient pas à l'invention, où le rapport cyclique R1 du premier signal pulsé est fixe et où seul le rapport cyclique R2 du deuxième signal pulsé varie selon l'éblouissement mesuré. On observe alors le comportement suivant :

- lorsqu'il n'y a « pas d'éblouissement », le rapport cyclique R2 est à son maximum : ainsi, la transparence de l'écran à transmission variable est au maximum et le conducteur 24 profite pleinement de son éclairage ainsi que de la luminosité extérieure.
- lorsqu'il y a « éblouissement fort », le rapport cyclique R2 est égal au rapport cyclique R1 et les signaux sont synchronisés, la transparence de l'écran à transmission variable est ainsi réduite tout en gardant le coefficient de transmission au maximum quand le dispositif d'éclairage 22 est allumé : ainsi, le conducteur 24 profite pleinement de son éclairage, et sa perception de la luminosité extérieure est réduite au minimum pour éviter l'éblouissement. Le conducteur 24 ne pourra à nouveau profiter pleinement de la luminosité extérieure que lorsque la source d'éblouissement aura disparu de son champ de vision.
- entre ces deux valeurs extrêmes, le rapport cyclique R2 varie progressivement et/ou par paliers entre sa valeur maximale et le rapport cyclique R1, en fonction de l'ampleur de l'éblouissement mesuré.

Le diagramme intitulé Mode 2 présente un mode de réalisation de l'invention, où le rapport cyclique R1 du premier signal pulsé et le rapport cyclique R2 du deuxième signal pulsé varient selon l'éblouissement mesuré. Dans cet exemple, les deux variations sont identiques, et les seuils d'éblouissement déclenchant une modification de l'éclairage sont identiques à ceux déclenchant une modification du coefficient de transmission, mais on peut envisager que les variations soient indépendantes, tout en restant dans le cadre de l'invention tel que décrit précédemment. On observe alors le comportement suivant :

- lorsqu'il n'y a « pas d'éblouissement », le rapport cyclique R1 et le rapport cyclique R2 sont à leurs maximums : ainsi, la transparence de l'écran à transmission variable est au maximum et le conducteur 24 profite pleinement de son éclairage ainsi que de la luminosité extérieure. Aussi, le premier signal pulsé qui contrôle le dispositif d'éclairage 22 a une amplitude plus faible que dans le Mode 1, de façon à ce que l'éclairage moyen du dispositif d'éclairage 22 soit le même que dans le Mode 1 sur la période T.
- lorsqu'il y a « éblouissement fort », le rapport cyclique R1 et le rapport cyclique R2 sont dans la même situation que dans le Mode 1 pour le même niveau d'éblouissement.
- entre ces deux valeurs extrêmes, le rapport cyclique R1 et le rapport cyclique R2 varient progressivement et/ou par paliers entre leurs valeurs maximales et minimales, en fonction de l'ampleur de l'éblouissement mesuré. L'amplitude du premier signal pulsé varie aussi en fonction de l'éblouissement mesuré, avantageusement de façon à ce que l'éclairage moyen du dispositif d'éclairage 22 soit le même sur une période T quel que soit l'éblouissement mesuré. Cela permet de conserver un éclairage moyen constant et d'ainsi respecter les réglementations.

Le Mode 1 a pour avantage de conserver fixe le premier signal pulsé, et donc de ne pas avoir à le modifier en fonction de l'éblouissement.

Le Mode 2 a pour avantage de faire varier la puissance allouée au dispositif d'éclairage 22, et d'ainsi optimiser la consommation de courant électrique nécessaire du système et son efficacité. En effet, les dispositifs d'éclairage fréquemment utilisés utilisent des diodes électroluminescentes (LEDs), et le rapport puissance/luminosité de celles-ci n'est pas constant : une augmentation de la puissance d'alimentation par un facteur 2 n'entraîne généralement pas une augmentation de la luminosité par un facteur 2. Avec le Mode 2, on évite alors une surconsommation de courant électrique lorsque l'on mesure aucun éblouissement.

Lors d'une utilisation du dispositif en Mode 2, la centrale de commande 30 peut envoyer le premier signal pulsé au circuit de gestion 32 et le deuxième signal pulsé au circuit de commande du coefficient de transmission 34, ou bien envoyer le même signal pulsé au circuit de gestion 32 et au circuit de commande du coefficient de transmission 34, le circuit de gestion 32 étant adapté pour régler l'amplitude du signal pulsé en fonction de l'éblouissement mesuré et du rapport cyclique R1.

Par ailleurs, un traitement supplémentaire de données pourra permettre de détecter les variations d'éblouissement. Ainsi, lorsque l'éblouissement mesuré devient de plus en plus élevé, le dispositif d'aide peut anticiper son action sur le coefficient de transmission de l'écran à transmission variable pour éviter l'éblouissement du conducteur 24. Autrement dit, ledit dispositif d'aide pourra tenir compte non seulement de la valeur délivrée par le capteur d'éblouissement 46, mais aussi de sa dérivée.

## Revendications

1. Dispositif d'aide à la conduite d'un véhicule automobile (20) comprenant un écran à transmission variable (26 ; 28 ; F), destiné à être disposé entre une scène de route (SR) et un conducteur (24) du véhicule, le dispositif comprenant un moyen d'évaluation de l'éblouissement (46), le véhicule (20) étant équipé d'au moins un dispositif d'éclairage (22) apte à émettre un faisceau d'éclairage de la scène de route (SR) en avant du véhicule (20), le dispositif d'aide étant configuré pour, en phase active, piloter un allumage d'au-moins une source lumineuse du dispositif d'éclairage par un premier signal pulsé périodique de période T et de rapport cyclique R1, et piloter un coefficient de transmission de l'écran (26 ; 28 ; F) par un deuxième signal pulsé périodique de période T et de rapport cyclique R2, le dispositif étant configuré pour modifier le coefficient de transmission de l'écran (26 ; 28 ; F) par le biais d'une modification du deuxième signal pulsé, de sorte que le rapport cyclique R2 prenne une valeur entre :

   - son maximum lorsque l'éblouissement mesuré par le moyen d'évaluation de l'éblouissement (46) est en dessous d'un premier seuil, et
   - R1 lorsque l'éblouissement mesuré par le moyen d'évaluation de l'éblouissement (46) est au dessus d'un second seuil,

   le dispositif d'aide étant **caractérisé en ce que** il est configuré pour modifier le pilotage de l'allumage par le biais d'une modification du premier signal pulsé, de sorte que le rapport cyclique R1 prenne une valeur entre deux valeurs extrêmes :

- son maximum lorsque l'éblouissement mesuré par le moyen d'évaluation de l'éblouissement (46) est en dessous d'un troisième seuil, et
- son minimum lorsque l'éblouissement mesuré par le moyen d'évaluation de l'éblouissement (46) est au dessus d'un quatrième seuil.

2. Dispositif d'aide selon la revendication 1, **caractérisé en ce que** le second seuil est supérieur au premier seuil.

3. Dispositif d'aide selon l'une des revendications 1 à 3, **caractérisé en ce que** le rapport cyclique R1 prend des valeurs identiques au rapport cyclique R2.

4. Dispositif d'aide selon l'une des revendications 1 à 4, **caractérisé en ce que** ledit dispositif d'aide est configuré pour modifier le pilotage de l'allumage par le biais d'une modification de l'amplitude du premier signal pulsé.

5. Dispositif d'aide selon la revendication 5, **caractérisé en ce que** ledit dispositif d'aide est configuré pour modifier le pilotage de l'allumage par le biais d'une modification de l'amplitude du premier signal pulsé de sorte que l'éclairement moyen de l'allumage pendant la période T soit constant lorsque le rapport cyclique R1 varie.

6. Dispositif d'aide selon l'une des revendications 1 à 6, **caractérisé en ce qu'**il comprend un capteur de luminosité (44), ledit dispositif étant configuré pour adapter les seuils d'éblouissement à la luminosité mesurée.

7. Dispositif d'aide selon l'une des revendications précédentes, **caractérisé en ce que** le moyen d'évaluation de l'éblouissement (46) est un capteur de luminosité dont on traite les mesures pour en déduire l'éblouissement.

8. Dispositif d'aide selon l'une des revendications précédentes, **caractérisé en ce que** l'écran à transmission variable est constitué :

   - par le pare-brise (26) du véhicule (20),
   - par un écran (F) disposé entre le pare-brise du véhicule et le conducteur du véhicule, ou
   - par des lunettes (28) portées par le conducteur (24) du véhicule (20).

9. Dispositif selon l'une des revendications 1 à 8, **caractérisé en ce que** l'écran à transmission variable est constitué par des lunettes (28) portées par le conducteur (24) du véhicule (20), et **en ce que** le moyen d'évaluation de l'éblouissement (46) est disposé sur les lunettes (28).

10. Lunettes pour dispositif d'aide à la conduite selon l'une quelconque des revendications 1 à 10.

11. Procédé d'aide à la conduite d'un véhicule automobile (20), le véhicule (20) étant équipé d'un écran à transmission variable (26 ; 28 ; F) destiné à être disposé entre la scène de route (SR) et un conducteur (24) du véhicule (20), le procédé contenant une étape de pilotage d'un coefficient de transmission de l'écran à transmission variable (26 ; 28 ; F),
procédé dans lequel, le véhicule (20) étant équipé d'au moins un dispositif d'éclairage (22) apte à émettre un faisceau d'éclairage d'une scène de route (SR) en avant du véhicule (20),
un allumage d'au moins une source lumineuse du dispositif d'éclairage étant piloté par un premier signal pulsé périodique de période T et de rapport cyclique R1 et le coefficient de transmission de l'écran à transmission variable étant piloté par un deuxième signal pulsé périodique de période T et de rapport cyclique R2, l'étape de pilotage du coefficient de transmission de l'écran à transmission variable (26 ; 28 ; F) comprenant une étape de modification du deuxième signal pulsé, de sorte que le rapport cyclique R2 prenne une valeur entre :

   - son maximum lorsque l'éblouissement mesuré par le moyen d'évaluation de l'éblouissement (46) est en dessous d'un premier seuil, et
   - R1 lorsque l'éblouissement mesuré par le moyen d'évaluation de l'éblouissement (46) est au dessus d'un second seuil, le procédé étant **caractérisé en ce que** il contient une étape de pilotage de l'allumage comprenant une étape de modification du premier signal pulsé, de sorte que le rapport cyclique R1 prenne une valeur entre deux valeurs extrêmes :

      - son maximum lorsque l'éblouissement mesuré par le moyen d'évaluation de l'éblouissement (46) est en dessous d'un troisième seuil, et
      - son minimum lorsque l'éblouissement mesuré par le moyen d'évaluation de l'éblouissement (46) est au dessus d'un quatrième seuil.

**12.** Procédé d'aide selon la revendication 12, **caractérisé en ce qu'**il comprend une étape de modification du pilotage de l'allumage par le biais d'une modification de l'amplitude du premier signal pulsé.

**13.** Procédé d'aide selon l'une des revendications 12 à 13, **caractérisé en ce que** le pilotage de l'allumage par le biais d'une modification de l'amplitude du premier signal pulsé est effectué de sorte que l'éclairement moyen de l'allumage pendant la période T soit constant lorsque le rapport cyclique R1 varie.

**Patentansprüche**

**1.** Vorrichtung zur Unterstützung des Fahrens eines Kraftfahrzeugs (20), umfassend eine Blende mit variabler Durchlässigkeit (26; 28; F), die dazu bestimmt ist, zwischen einer Straßenszene (SR) und einem Fahrer (24) des Fahrzeugs angeordnet zu werden, wobei die Vorrichtung ein Mittel zum Bewerten der Blendung (46) aufweist, wobei das Fahrzeug (20) mit mindestens einer Beleuchtungsvorrichtung (22) ausgestattet ist, die geeignet ist, einen Beleuchtungsstrahl der Straßenszene (SR) vor dem Fahrzeug (20) auszusenden, wobei die Vorrichtung zur Unterstützung konfiguriert ist, um in der aktiven Phase ein Einschalten mindestens einer Lichtquelle der Beleuchtungsvorrichtung durch ein erstes periodisch gepulstes Signal mit der Periode T und dem Tastverhältnis R1 zu steuern und einen Durchlässigkeitskoeffizienten der Blende (26; 28; F) durch ein zweites periodisch gepulstes Signal mit der Periode T und dem Tastverhältnis R2 zu steuern, wobei die Vorrichtung konfiguriert ist, um den Durchlässigkeitskoeffizienten der Blende (26; 28; F) durch eine Änderung des zweiten gepulsten Signals derart zu ändern, dass das Tastverhältnis R2 einen Wert zwischen:

- seinem Maximalwert, wenn die Blendung, die von dem Mittel zum Bewerten der Blendung (46) gemessen wird, unter einem ersten Schwellenwert liegt, und
- R1, wenn die Blendung, die von dem Mittel zum Bewerten der Blendung (46) gemessen wird, über einem zweiten Schwellenwert liegt, annimmt,

wobei die Vorrichtung zur Unterstützung **dadurch gekennzeichnet ist, dass** sie konfiguriert ist, um das Steuern des Einschaltens durch ein Ändern des ersten gepulsten Signals derart zu ändern, dass das Tastverhältnis R1 einen Wert zwischen zwei Extremwerten annimmt:

- seinem Maximalwert, wenn die Blendung, die von dem Mittel zum Bewerten der Blendung (46) gemessen wird, unter einem dritten Schwellenwert liegt, und
- seinem Mindestwert, wenn die Blendung, die von dem Mittel zum Bewerten der Blendung (46) gemessen wird, über einem vierten Schwellenwert liegt.

**2.** Vorrichtung zur Unterstützung nach Anspruch 1, **dadurch gekennzeichnet, dass** der zweite Schwellenwert höher als der erste Schwellenwert ist.

**3.** Vorrichtung zur Unterstützung nach einem der Ansprüche 1 bis 2, **dadurch gekennzeichnet, dass** das Tastverhältnis R1 gleiche Werte wie das Tastverhältnis R2 annimmt.

**4.** Vorrichtung zur Unterstützung nach einem der Ansprüche 1 bis 3, **dadurch gekennzeichnet, dass** die Vorrichtung zur Unterstützung konfiguriert ist, um das Steuern des Einschaltens durch ein Ändern der Amplitude des ersten gepulsten Signals zu ändern.

**5.** Vorrichtung zur Unterstützung nach Anspruch 4, **dadurch gekennzeichnet, dass** die Vorrichtung zur Unterstützung konfiguriert ist, um das Steuern des Einschaltens durch ein Ändern der Amplitude des ersten gepulsten Signals derart zu ändern, dass das durchschnittliche Beleuchten des Einschaltens während der Periode T konstant ist, wenn das Tastverhältnis R1 variiert.

**6.** Vorrichtung zur Unterstützung nach einem der Ansprüche 1 bis 5, **gekennzeichnet dadurch, dass** sie einen Helligkeitssensor (44) aufweist, wobei die Vorrichtung konfiguriert ist, um die Blendschwellenwerte an die gemessene Helligkeit anzupassen.

**7.** Vorrichtung zur Unterstützung nach einem der vorhergehenden Ansprüche, **dadurch gekennzeichnet, dass** das Mittel zum Bewerten der Blendung (46) ein Helligkeitssensor ist, dessen Messungen verarbeitet werden, um daraus die Blendung abzuleiten.

8. Vorrichtung zur Unterstützung nach einem der vorhergehenden Ansprüche, **dadurch gekennzeichnet, dass** die Blende mit variabler Durchlässigkeit aus:

   - der Windschutzscheibe (26) des Fahrzeugs (20),
   - einer Blende (F), die zwischen der Windschutzscheibe des Fahrzeugs und dem Fahrer des Fahrzeugs angeordnet ist, oder
   - einer Brille (28), die von dem Fahrer (24) des Fahrzeugs (20) getragen wird, besteht.

9. Vorrichtung zur Unterstützung nach einem der Ansprüche 1 bis 7, **dadurch gekennzeichnet, dass** die Blende mit variabler Durchlässigkeit aus einer Brille (28) besteht, die von dem Fahrer (24) des Fahrzeugs (20) getragen wird, und dass das Mittel zum Bewerten der Blendung (46) auf der Brille (28) angeordnet ist.

10. Brille für die Vorrichtung zur Unterstützung zum Fahren nach einem der Ansprüche 1 bis 9.

11. Verfahren zur Unterstützung des Fahrens eines Kraftfahrzeugs (20), wobei das Fahrzeug (20) mit einer Blende mit variabler Durchlässigkeit (26; 28; F) ausgestattet ist, die dazu bestimmt ist, zwischen einer Straßenszene (SR) und einem Fahrer (24) des Fahrzeugs (20) angeordnet zu werden, wobei das Verfahren einen Schritt des Steuerns des Durchlässigkeitskoeffizienten der Blende mit variabler Durchlässigkeit (26; 28; F) aufweist,
   wobei in dem Verfahren das Fahrzeug (20) mit mindestens einer Beleuchtungsvorrichtung (22) ausgestattet ist, die geeignet ist, einen Beleuchtungsstrahl einer Straßenszene (SR) vor dem Fahrzeug (20) auszusenden,
   wobei ein Beleuchten von mindestens einer Lichtquelle der Beleuchtungsvorrichtung durch ein erstes periodisch gepulstes Signal mit der Periode T und dem Tastverhältnis R1 gesteuert wird und wobei der Durchlässigkeitskoeffizient der Blende mit variabler Durchlässigkeit durch ein zweites periodisch gepulstes Signal mit der Periode T und dem Tastverhältnis R2 gesteuert wird, wobei der Schritt des Steuerns des Durchlässigkeitskoeffizienten der Blende mit variabler Durchlässigkeit (26; 28; F) einen Schritt des Änderns des zweiten gepulsten Signals derart aufweist, dass das Tastverhältnis R2 einen Wert zwischen:

   - seinem Maximalwert, wenn die Blendung, die von dem Mittel zum Bewerten der Blendung (46) gemessen wird, unter einem ersten Schwellenwert liegt, und
   - R1, wenn die Blendung, die von dem Mittel zum Bewerten der Blendung (46) gemessen wird, über einem zweiten Schwellenwert liegt, annimmt,

   wobei das Verfahren **dadurch gekennzeichnet ist, dass** es einen Schritt des Steuerns des Einschaltens aufweist, der einen Schritt des Änderns des ersten gepulsten Signals derart aufweist, dass das Tastverhältnis R1 einen Wert zwischen zwei Extremwerten annimmt:

   - seinem Maximalwert, wenn die Blendung, die von dem Mittel zum Bewerten der Blendung (46) gemessen wird, unter einem dritten Schwellenwert liegt, und
   - seinem Mindestwert, wenn die Blendung, die von dem Mittel zum Bewerten der Blendung (46) gemessen wird, über einem vierten Schwellenwert liegt.

12. Verfahren zur Unterstützung nach Anspruch 11, **dadurch gekennzeichnet, dass** es einen Schritt des Änderns des Steuerns des Einschaltens durch ein Ändern der Amplitude des ersten gepulsten Signals aufweist.

13. Verfahren zur Unterstützung nach einem der Ansprüche 11 bis 12, **dadurch gekennzeichnet, dass** das Einschalten durch ein Ändern der Amplitude des ersten gepulsten Signals derart durchgeführt wird, dass das durchschnittliche Beleuchten des Einschaltens während der Periode T konstant ist, wenn das Tastverhältnis R1 variiert.


**Claims**

1. A motor vehicle driving assistance device (20) comprising a variable transmission screen (26; 28; F), intended to be disposed between a road scene (SR) and a driver (24) of the vehicle, the device comprising glare evaluation means (46),
   the vehicle (20) being equipped with at least one lighting device (22) capable of emitting a road scene lighting beam (SR) in front of the vehicle (20), the assistance being configured in order, in the active phase, to control an ignition of at least one light source of the lighting device by means of a first periodic pulsed signal of period T and of cyclic ratio R1, and to control a transmission coefficient of the screen (26; 28; F) by means of a second periodic pulsed signal of period T and of cyclic ratio R2,

the device being configured to change the transmission coefficient of the screen (26; 28; F) by changing the second pulsed signal so that the duty cycle R2 assumes a value between :

- its maximum when the glare measured by the glare assessment means (46) is below a first threshold, and
- R1 when the glare measured by the glare assessment means (46) is above a second threshold,

the assistance being **characterized in that** it is configured to change the ignition control by changing the first pulse signal so that the duty cycle R1 assumes a value between two extreme values :

- its maximum when the glare measured by the glare assessment means (46) is below a third threshold, and
- its minimum when the glare measured by the glare assessment means (46) is above a fourth threshold.

2. Assistance device according to claim 1, **characterized in that** the second threshold is higher than the first threshold.

3. Assistance device according to one of claims 1 to 2, **characterized in that** the duty cycle R1 assumes values identical to the duty cycle R2.

4. Assistance device according to one of claims 1 to 3, **characterized in that** said assistance is configured to modify the ignition control by changing the amplitude of the first pulse signal.

5. Assistance device according to claim 4, **characterized in that** said assistance is configured to modify the ignition control by changing the amplitude of the first pulse signal so that the average illumination of the ignition during the period T is constant as the duty cycle R1 varies.

6. Assistance device according to one of claims 1 to 5, **characterized in that** it comprises a brightness sensor (44), assistance being configured to adapt the glare thresholds to the measured brightness.

7. Assistance device according to one of the preceding claims, **characterized in that** the glare evaluation means (46) is a brightness sensor, the measurements of which are processed in order to deduce the glare.

8. Assistance device according to one of the preceding claims, **characterized in that** the variable transmission screen consists of :

- through the windscreen (26) of the vehicle (20),
- by a screen (F) disposed between the windscreen of the vehicle and the driver of the vehicle, or
- by glasses (28) worn by the driver (24) of the vehicle (20).

9. Assistance device according to one of claims 1 to 7, **characterized in that** the variable-transmission screen consists of spectacles (28) which are worn by the driver (24) of the vehicle (20), and **in that** the glare-evaluation means (46) is arranged on the spectacles (28).

10. Glasses for a driving assistance device according to any of claims 1 to 9.

11. A method of assisting the driving of a motor vehicle (20), the vehicle (20) being equipped with a variable transmission screen (26; 28; F) intended to be disposed between the road scene (SR) and a driver (24) of the vehicle (20), the method containing a step of controlling a transmission coefficient of the variable transmission screen (26; 28; F), method in which, the vehicle (20) being equipped with at least one lighting device (22) capable of emitting a beam for lighting a road scene (SR) in front of the vehicle (20), a switching-on of at least one light source of the lighting device being controlled by a first periodic pulsed signal of period T and duty cycle R1 and the transmission coefficient of the variable transmission screen being controlled by a second periodic pulsed signal of period T and duty cycle R2, the step of driving the transmission coefficient of the variable transmission screen (26; 28; F) comprising a step of modifying the second pulsed signal so that the duty cycle R2 takes a value between :

- its maximum when the glare measured by the glare assessment means (46) is below a first threshold, and

- R1 when the glare measured by the glare assessment means (46) is above a second threshold,

the method being **characterized in that** it contains a step of controlling the ignition comprising a step of modifying the first pulsed signal so that the duty cycle R1 takes a value between two extreme values :

- its maximum when the glare measured by the glare assessment means (46) is below a third threshold, and
- its minimum when the glare measured by the glare assessment means (46) is above a fourth threshold.

12. A method of assisting the driving according to claim 11, **characterized in that** it comprises a step of modifying the ignition control by means of a modification of the amplitude of the first pulsed signal.

13. A method of assisting the driving according to one of claims 11 to 12, **characterized in that** the ignition control by means of a change in the amplitude of the first pulse signal is carried out in such a way that the average ignition illumination during the period T is constant when the duty cycle R1 varies.

Fig. 1

Fig. 2

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4286308 A